# EUROPÄISCHE PATENTSCHRIFT

(11) **EP 3 235 976 B1**
(45) Veröffentlichungstag und Bekanntmachung des Hinweises auf die Patenterteilung: **28.09.2022**
(21) Anmeldenummer: 17167214.0
(22) Anmeldetag: 20.04.2017
(51) Int. Cl.: E04H 15/54, E04H 15/64, E04H 15/20

(54) **VERWENDUNG VON WÄRMEREFLEXIONS-MATTEN ZUR SENKUNG DES U-WERTES BESTEHENDER HOLZBINDER-HALLEN, STAHL- UND ALUMINIUMSTAHL-BAUTEN, GERÜSTBAUTEN ODER FESTZELTEN UND ÄHNLICHEN NICHT VON LUFT GETRAGENEN BESTEHENDEN GEBÄUDEN**
USE OF HEAT-REFLECTING MATS TO REDUCE THE U-VALUE OF EXISTING WOOD-TRUSS HALLS, STEEL AND ALUMINUM-STEEL BUILDINGS, SCAFFOLD STRUCTURES OR MARQUEES AND SIMILAR NON-AIR-SUPPORTED EXISTING BUILDINGS.
UTILISATION DE MATELAS THERMO-RÉFLÉCHISSANTS POUR RÉDUIRE LA VALEUR U DES HALLS EN BOIS, DES CONSTRUCTIONS EN ACIER ET EN ALUMINIUM, DES ÉCHAFAUDAGES OU DES TENTES ET DES BÂTIMENTS EXISTANTS SIMILAIRES NON PORTÉS PAR L'AIR.

(30) Priorität: 21.04.2016 CH 5292016
(43) Veröffentlichungstag der Anmeldung: 25.10.2017
(73) Patentinhaber: Ming, Niklaus, 3856 Brienzwiler (CH)
(72) Erfinder: Ming, Niklaus, 3856 Brienzwiler (CH)
(74) Vertreter: Felber, Josef

(56) Entgegenhaltungen:
- WO-A1-2009/073000
- WO-A1-2017/098040
- WO-A2-2017/098042
- DE-U1-202004 001 154
- US-A1- 2013 074 894
- DR WILFRIED KRAH*: "Weltraumdämmung auf der Erde - Innovation oder Reinfall?", WKSB. ZEITSCHRIFT FUER WARMESCHUTZ, KALTESCHUTZ, SCHALLSCHUTZ,BRANDSCHUTZ, GRUNZWEIG UND HARTMANN AG, LUDWIGSHAFEN AM RHEIN, DE, vol. 68, 1 January 2012 (2012-01-01), pages 6-8, XP009519392, ISSN: 0341-0293

## Beschreibung

Diese Erfindung betrifft eine Massnahme, um die U-Wert von bestimmten Gebäuden wesentlich zu senken. Dazu wird erfindungsgemäss eine besondere Abdeckmatte eingesetzt, welche erstens auf Zug belastbar ist, zweitens wasserdicht ist und drittens für die Wärmeisolierung bzw. als Wärmereflexions-Matte wirkt. Sie kann vor allem zur Ausrüstung oder Nachrüstung für die Wärmereflexion an verschiedenen Bauten eingesetzt werden, etwa an Holzbinderhallen, Stahlbauhallen, an Aluminiumstahl-Hallen, an Gerüstbauten oder Festzelten.

Viele Bauten weisen einen hohen U-Wert auf. Der U-Wert ist ein Mass dafür, angegeben in der Einheit W/m²s, wieviel Wärme pro Fläche und Zeit durch eine Gebäudehülle nach aussen entweicht. So gibt es viele Stahlbauten, welche eine Struktur aus Stahlträgern aufweisen, die dann zum Beispiel mit Wellblech, mit Press-Spanplatten oder mit Eternit^{®}-Bauplatten und -Dachplatten eingekleidet sind. Weiter bekannt sind Holzbinder-Bauten, die ebenfalls oftmals mit solchen Platten eingedeckt sind. Als Folienverkleidete Bauten sind auch Aluminium-Binderbauten bekannt, bei denen Aluminiumträger zu einer Struktur vernietet oder verschraubt sind, die dann mit Folienmaterial bespannt bzw. eingefasst wird. Alle diese Typen von Bauten weisen den gravierenden Nachteil auf, dass sie eine schlechte Wärmedämmung aufweisen. Allein in der Schweiz gibt es mehrere Hunderttausend Quadratmeter von derartigen Hallen mit mangelhaftem U-Wert überbaute Flächen. Dabei wirkt sich ein hoher U-Wert nicht nur bei kalten Aussentemperaturen negativ aus, sondern umgekehrt auch bei hohen Aussentemperaturen. In klimatischen Zonen, wo es meistens heiss ist, erhitzt sich der Innenraum derart stark, dass man sich kaum in solchen Hallen aufhalten kann. Könnte man sie besser wärmedämmen, so wäre ein weit breiterer Einsatz möglich, weil dann ihr Inneres wirksam und sparsam kühlbar wäre.

Die Aufgabe der vorliegenden Erfindung ist es deshalb, eine Massnahme anzugeben, um den U-Wert einer Stahlbauhalle, einer Aluminiumstahl-Halle, einer Holzbinder-Baute, einer Gerüstbaute oder eines Zeltes wesentlich abzusenken, also einen höheren Wärmedämmwert zu erreichen.

Diese Aufgabe wird gelöst durch die Verwendung von Wärmereflexions-Matten zum Einfassen oder Einkleiden bestehender Holzbinder-Hallen, Stahlbau- und Aluminiumstahl-Bauten, Gerüstbauten, Festzelten und ähnlichen nicht von Luft getragenen bestehenden Gebäuden durch Einfassen oder Einkleiden mit längs ihrer Längsränder zugkraftschlüssig miteinander verbundener Wärmereflexions-Matten auf ihrer Aussenseite oder Innenseite, wobei die einzelnen Wärmereflexions-Matten aus einem Sandwich-Aufbau aus wenigstens zwei Lagen von zugfester textilverstärkter Kunststoff-Folie bestehen und an mindestens zwei einander gegenüberliegenden Rändern mit Verbindungsmitteln für eine zugkraftschlüssige Befestigung ausgerüstet sind, und diese Wärmereflexions-Matten mit einem Wärmereflexions-Stoff in Form einer Hybrid-Schicht mit mehrlagigen Wärmereflexions-Schichten ausgefüllt sind, wobei die beiden äusseren Schichten aus Aluminium-Folie bestehen, die mit feinen Netzen aus Fäden oder Fasern verstärkt sind und dazwischen null bis drei Lagen IR-reflektierende Alufolien enthalten, und zwischen jeweils zwei bis fünf Alufolien je zwei Lagen einer Kunststoff-Folie mit darin enthaltenen kleinen Luftbläschen zur Bildung von absorptionsreduzierenden Luftpolstern angeordnet sind, und wobei diese Wärmereflexions-Matten mit den an mindestens zwei einander gegenüberliegenden Rändern vorhandenen Verbindungsmitteln zugkraftschlüssig miteinander verbunden werden.

In den Zeichnungen sind Ausführungsbeispiele für eine solche Wärmereflexions-Matte dargestellt und sie werden nachfolgend anhand dieser Zeichnungen beschrieben, ihr Aufbau wird erläutert und ihre Wirkung wird erklärt.

Es zeigt:
- Figur 1:: Eine Wärmereflexions-Matte mit Kedern an ihren beiden gegenüberliegenden Rändern;
- Figur 2:: Ein Streifenfundament aus Beton mit einem Verbindungsprofil als Ankerschiene zum zugfreien Befestigen einer Wärmereflexions-Matte;
- Figur 3:: Eine streifenförmige Wärmereflexions-Matte zum Überspannen eines Gebäudes;
- Figur 4:: Eine Wärmereflexions-Matten-Verbindung in perspektivischer Darstellung, an der Stelle A-A oder B-B von Figur 3;
- Figur 5:: Die Verbindungsmöglichkeit zum Verbinden der beiden Ränder von angrenzenden Wärmereflexions-Matten 8 mittels eines eingeschweissten Kederprofils in einem Querschnitt dargestellt, an der Stelle A-A oder B-B in Figur 3;
- Figur 6:: Die Wärmereflexions-Matte 8 in einem Querschnitt längs B-B von Figur 3, mit dem Keder 5 zum überlappenden Verbinden mit einer Wärmereflexions-Matte zur Befestigung der Wärmereflexions-Mattenbahn am Boden;
- Figur 7:: Eine Überdeckung für eine oben halbzylindrisch geformte Halle schematisch dargestellt, mit mehreren Wärmereflexions-Mattenbahnen 8 aneinander gereiht und zugkraftschlüssig miteinander verbunden;
- Figur 8: Ein Doppelprofil zum Verbinden zweier Wärmereflexions-Matten mit endseitigen Kedern;
- Figur 9:: Eine zugkraftschlüssige Einschweissung eines Keders längs des Randes einer Wärmereflexions-Matte;
- Figur 10:: Eine alternative zugkraftschlüssige Einschweissung eines Keders längs des Randes einer Wärmereflexions-Matte;
- Figur 11:: Die Verbindung zweier Wärmereflexions-Matten mittels eines Doppelprofiles.

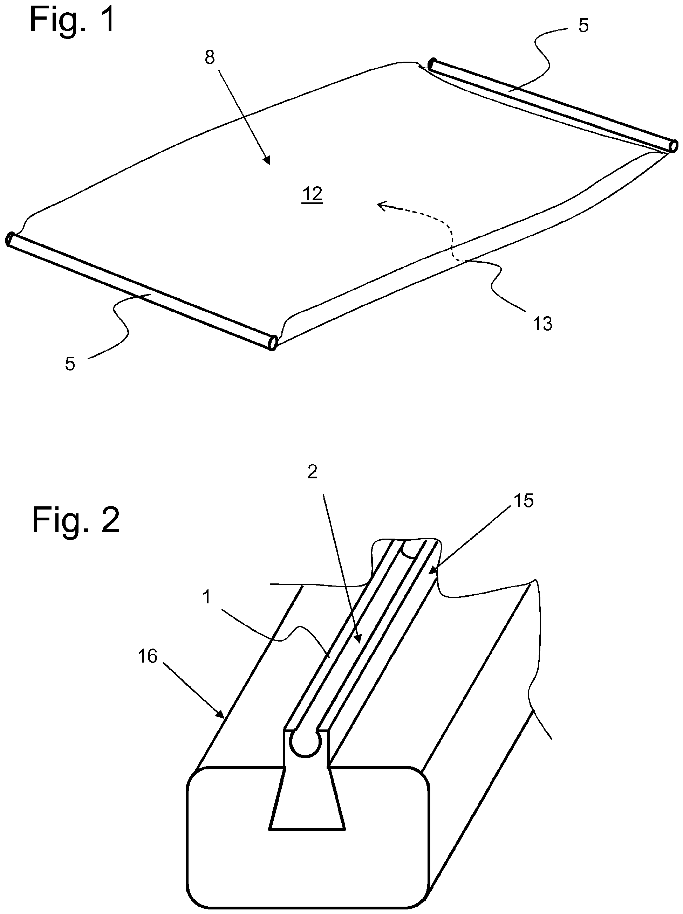

Die sandwichartig aufgebaute Wärmereflexions-Matte besteht wie in **Figur 1** gezeigt aus wenigstens zwei übereinanderliegenden Lagen von textilverstärkter Kunststoff-Folie 12. Solche Kunststoff-Folien 12 sind besonders reissfest und mit hohen Zugkräften belastbar. In den Raum zwischen den beiden Lagen von Folie 12 wird eine ganz besondere Wärme**reflexions**-Schicht 13 eingelegt, und dann werden die Ränder dieses "Sandwichs" rundum verschweisst. Die in die Wärmereflexions-Matte 8 eingelegte oder eingeschobene Wärme**reflexions**-Schicht 13 wird später noch genauer beschrieben und identifiziert. An den Rändern der so entstandenen Matte 8 werden Verbindungsmittel angebracht, für eine zugkraftschlüssige Verbindung mit einer anschliessenden Wärmereflexions-Matte 8 oder mit einem anderen Bauteil oder mit einem Fundament einer Baute.

Wie in **Figur 1** gezeigt, ist an den beiden gegenüberliegenden Rändern der Wärmereflexions-Matte 8 als Beispiel je ein Keder 5 angebracht, der zugkraftschlüssig mit der Matte 8 verbunden ist. Anstelle eines Keders 5 können auch andere Verbindungsmittel treten. Zum Beispiel können das zwei miteinander verschraubte Aluminiumleisten sein, welche den Randbereich der Matte 8 zwischen sich einklemmen und an der nächsten solchen Doppel-Leiste einhängbar sind oder mittels Verbindungstücken verbindbar sind. Die Matten 8 können jede gewünschte Grösse aufweisen, rechteckig oder quadratisch mit bis zu mehreren Metern Seitenmass, können aber auch in anderen Flächenformen hergestellt werden, etwa als Dreiecke, als Sechs- oder Achtecke, die an allen Rändern miteinander zugkraftschlüssig verbunden werden können.

Eine geeignete Wärmereflexions-Schicht ist zum Beispiel als Lu.po.Therm B2+8 bekannt und von LSP GmbH, Gewerbering 1, A-5144 Handenberg erhältlich. Sie wird u.a. in Rollen mit 1.5 m oder 2.5 m Breite geliefert und die Schicht kann ab diesen Rollen in Abschnitte zugeschnitten werden, vorliegend also auf die jeweilige Breite der Wärmereflexions-Mattenbahn. Diese mehrlagigen Wärmereflexions-Schichten sind in Ausführungen bis 12 cm Dicke erhältlich. Der hier erwähnte Typ besteht aus einer ersten, mit einem eingearbeiteten feinen Netz aus Fäden oder Fasern verstärkten Aluminium-Folie. Dann kommen zwei Lagen von dünnen Kunststoff-Folien mit lauter darin enthaltenen kleinen Luftbläschen, ähnlich wie jene Folien mit Blasen, die man in der Verpackungsindustrie zum Schutz von zerbrechlichen Waren einsetzt, jedoch wesentlich leichter und dünner, mit flacheren Bläschen. Dann kommt eine nächste, ganz dünne Aluminiumfolie, dann kommen wieder zwei Kunststoff-Folien mit Luftbläschen, dann wieder eine dünne Aluminiumfolie, dann wieder zwei Kunststoff-Folien mit Luftbläschen, dann wieder eine dünne Aluminiumfolie, dann wieder zwei Kunststoff-Folien mit Luftbläschen und schliesslich wieder eine mit einem Fasernetz verstärkte Aluminiumfolie als Aussenschicht. Insgesamt sind es dann in diesem Fall fünf Aluminium-Folien, wobei die äusseren beiden verstärkt sind, und wobei diese fünf Folien je zwischen sich zwei dünne Kunststoff-Folien mit kleinen Luftbläschen einschliessen. Die Dicke dieses ganzen Schichtaufbaus der Wärmereflexions-Schicht beträgt zusammengedrückt bloss ca. 2 mm. Schon die allererste Aluminiumfolie erzielt in der Praxis eine Reflexion von ca. 90° der einstrahlenden Wärme. Während Wärmereflexionsstoffe wie Mineralwolle, Polystyrol, Polyurethan, Zellulose, Holzwolle, Hanf oder andere Stoffe bloss zu dämmen vermögen, mit einem λ > 0.026 W/mK, so wird mit solchen Materialien ausser Acht gelassen, dass die Strahlungswärme bezogen auf die Temperatur einen viel grösseren Anteil am Wärmeverlust ausmacht, über 90%, weil gilt T⁴ = W/m². Je höher die Temperatur, umso dramatischer ist der Anteil der Wärmestrahlung, die letztendlich zum Wärmeverlust führt. Der Wärmeschutz wird kaskadenartig erzielt, wenn die Wärmereflexions-Schicht mehrlagig ausgeführt ist, mit einer Vielzahl kumulierender Wechselwirkungen. So erreichen diese Wärmereflexions-Schichten annähernd 100% Reflexion der eintreffenden Strahlungswärme. Diese wird also zum allergrössten Teil in das Innere zum Beispiel einer damit ausgerüsteten Traglufthalle zurückreflektiert. Umgekehrt wird im Sommer die Wärmeeinstrahlung der Sonne reflektiert und im Innern der Traglufthalle bleibt es angenehm kühl, was gerade für das Tennisspielen hoch willkommen ist. Die technischen Spezifikationen dieser Wärmereflexions-Schichten lauten wie folgt:

| Technische Merkmale | Leistung | Harmonisierte technische Spezifikationen |
|---|---|---|
| Thermische Isolierleistung | U = 0.10 W/m² K | Emissionsgrade aus 2.2.6 ETA-12/0080, |
| | WLZ (Lambda) = 0.003 W/mk | |
| | R=10 m² K /W | gültig bis 25.07.2017 |
| Dampfsperre = 1. Schicht | S_{d} = 1500m | EN 12086 + EN 13984 |
| Diffussionstoffe ab 2. Schicht | S_{d} = 10m | DIN 52615 |
| Brandverhalten | Klasse E | EN-13501-1 + A1 |
| **Infrarot-Reflexionen** | **84%, 95%, 95%, 95% + 82%** | **CUAP 12.01/12, Anhang B+C** |
| Elektro-Smog-Abschirmung | HF 40dB = 99.99 % | Nahfeldsonde kalibriert |

Diese Wärmereflexions-Matten werden bisher bei einer Tennis-Traglufthalle vorzugsweise in einer 3 cm dicken Ausführung zwischen die äussere und innere Membran der Traglufthalle eingebaut. Sie sind umlaufend geschweisst, bloss zur Fixierung, also nicht dicht und fest. Als Fabrikat eignet sich zum Beispiel Lu.Po Therm B2+8 Wärmereflexion oder jede andere Schicht mit ähnlichen technischen und mechanischen Eigenschaften im Bereich der Wärmereflexion. Lu.Po Therm B2+8 ist gut geeignet, weil es dünn ist, einfach biegsam und flexibel. Weil diese Wärmereflexions-Schichten hoch flexibel sind, ist deren Einbau auch bei Ecken und Konturen kein Problem. Sie sind nicht hygroskopisch, und daher bieten sie eine gleichbleibende Reflexionswirkung. Als Wärmereflexions-Schicht wird vorteilhaft eine mehrlagige Hybrid-Schicht mit integrierten energieeffizienten IR-reflektierenden Alufolien eingesetzt. Zwei bis acht Lagen absorptionsreduzierende Luftpolsterfolien ergeben die konvektiven Distanzen durch die eingeschlossene Luft in den Noppen und damit eine optimale Konvektivwirkung. Diese reduziert die Transmissionswärmeverluste. Die Wärmereflexions-Schicht enthält bis zu fünf Lagen metallisierte Folien zur hocheffektiven Infrarot-Rückstrahlung, mit geringer Eigenemission. Zusätzlich enthält die Schicht eine hoch wirksame Abschirmung gegen hochfrequente Strahlen, Wellen und Felder. Solche Wärmereflexions-Schichten sind jedoch nicht auf Zug belastbar. Um diese Zugfestigkeit zu erreichen, werden sie gemäss dieser Erfindung zwischen zwei Folien eingebaut und rundum zu einer Matte verschweisst, wobei diese Matte dann eine quadradische, rechteckige, dreieckige oder mehreckige Form aufweisen kann. Nur wenn dieses Matten Zugkräfte aufnehmen können, eignen sich sich zum Einfassen oder Einkleiden einer Stahlbauhalle, Aluminiumstahl-Halle, Holzbinder-Baute, Gerüstbaute oder eines Zelten.

Bautechnisch attraktiv ist ausserdem die Tatsache, dass die in diese Matte einzusetzenden Wärmereflexions-Schichten sehr leicht sind - mit einem spezifischen Gewicht von bloss 0.430 kg/m². Bei einer Traglufthalle für drei Tennisplätze, mit einer Membranfläche von 2'324 m², ergibt das eine zusätzliche Last von insgesamt 999.32 kg, also ca. eine Tonne. Dazu kommt das Gewicht des Folienmaterials für die Herstellung der Wärmereflexions-Matten, welche diese Wämereflexions-Schichten enthalten. Hierzu eignet sich eine leichte Folie von ca. 0.600 kg/m². Die aussen zu liegende Schicht oder äussere Membran weist ein Gewicht von ca. 0.900 kg/m² auf, die innere Schicht oder Membran ca. 0.600 kg/m². Verglichen mit den zu tragenden Schneelasten und der Eigenlast der verbauten Folien ist das Gewicht der einzusetzenden zusätzlichen Wärmereflexions-Matten gesamthaft fast vernachlässigbar wenig.

Es können zum Beispiel streifenförmige Wärmereflexions-Matten hergestellt werden, welche solche Wärmereflexions-Schichten enthalten, und die dann längs ihrer Längsseiten mittels Kedern und Keder-Verbindungsprofilen miteinander zu einer ganzen Membrane verbunden werden können. Eine bestehende Stahlbauhalle, Aluminiumstahl-Halle, Holzbinder-Baute, Gerüstbaute oder ein bestehendes Zelten kann mit solchen miteinander verbindbaren Wärmereflexions-Matten auch nachträglich eingefasst werden, den U-Wert enorm reduziert. In einigen Fällen sind gar 0.5 W/m²K erreichbar. Dieses Einfassen geht rasch vonstatten, benötigt wenig Personal und bietet erst noch den Vorteil, dass diese Wärme-Reflexionsschicht bei Bedarf auch einfach wieder abgebaut, verschoben und anderenorts wieder eingesetzt werden kann. Alle eingesetzten Wärmereflexions-Matten 8 werden miteinander oder mit dem Gebäude 8 verspannt.

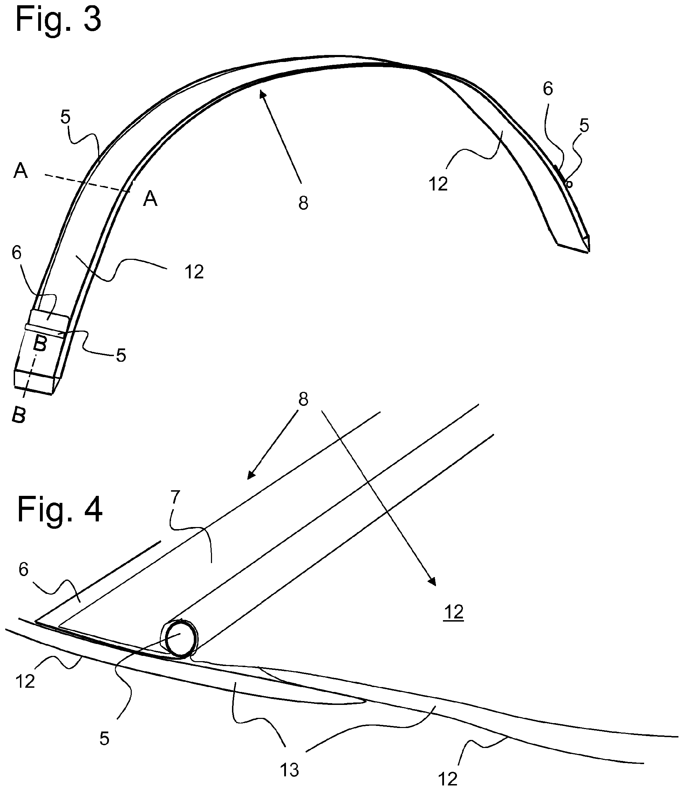

Am Boden können diese Wärmereflexions-Matten, auch im Falle von Streifen, die sich von einer Seite eines Gebäudes mit zum Beispiel einer halbzylindrischen Form - wie sie etwa eine Wellblech-Stahlbaute aufweist, bis auf die andere Seite erstrecken, wie in **Figur 3** gezeigt, und die Streifen können an Streifenfundamenten 16 aus Beton verankert werden, wobei diese Streifenfundamente hierzu ein Keder-Verbindungsprofil 1 mit Kederfassung 2 als Ankerschiene 15 aufweisen, entweder eingegossen wie in Figur 2 gezeigt oder aufgeschraubt. Die auf den Boden hinabreichenden Streifen von Wärmereflexions-Matten 8 werden mit ihren endseitigen Kedern 5 in diese Verbindungsprofile 1 bzw. Ankerschienen 15 eingeführt, sodass eine zugkraftschlüssige und dichte Verbindung erzeugt wird. Die einzelnen Wärmereflexions-Matten 8 werden längs ihrer Längsränder, die ebenfalls mit Kedern 5 ausgerüstet sind, mittels mehrerer Verbindungsprofile 1 miteinander verbunden, sodass eine komplette Membrane entsteht, die aus einer Anzahl solcher nebeneinander liegender Bahnen von Wärmereflexions-Matten 8 besteht.

Die **Figur 3** zeigt einen einzelnen Streifen einer Wärmereflexions-Matte 8, welcher sich wie angedeutet von einer Seite bogenförmig über den Zenit der Halle bis auf die andere Seite an den Boden erstrecken kann, mit seiner inneren und äusseren Folienbahn 12. Die Verbindungsprofile 1 werden in Längsrichtung zu den Wärmereflexions-Mattenstreifen 8 über deren längsrandseitige Keder 5 geschoben, eines nach dem anderen. Entweder setzt man lange, biegsame Verbindungsprofile ein oder eine ganze Anzahl aneinander anschliessende, relativ kurze und biegesteife Verbindungsprofile, je nach Krümmungsradius des zu bedeckenden Hallendachs.

In **Figur 4** ist die Verbindung zweier Wärmereflexions-Matten 8 in perspektivischer Ansicht gezeigt. Nur die Wärmereflexions-Matte 8 links im Bild ist mit einem Keder 5 ausgerüstet, der einen Folienfortsatz 6 aufweist und auf die Folie 12 aufgeschweisst ist. Die Wärmereflexions-Matte 8 rechts ist mit ihrem freien Folien-Lappen 7 längs ihres Längsbereiches um den Keder 5 auf der anderen Folienbahn 12 geschlungen und hernach wird ein Verbindungsprofil 1 über den abstehenden Keder 5 geschoben, wie noch gezeigt wird. Dieses umfasst den Keder 5 um mehr als ca. 270° und das bewirkt eine zugkraftschlüssige Verbindung der beiden Wärmereflexions-Matten 8 quer zum Keder 5, wobei sich die beiden Matten 8 längs ihrer Längsränder wenig überlappen und somit eine Wärmebrücke vermieden wird. Die einzelnen Verbindungsprofile 1 messen zum Beispiel ca. 30 bis 50 cm und können daher von einem einzelnen Monteur aufgeschoben werden. Wahlweise sind auch längere Profilabschnitte einsetzbar, bis hin zu maximal transportierbarer Länge.

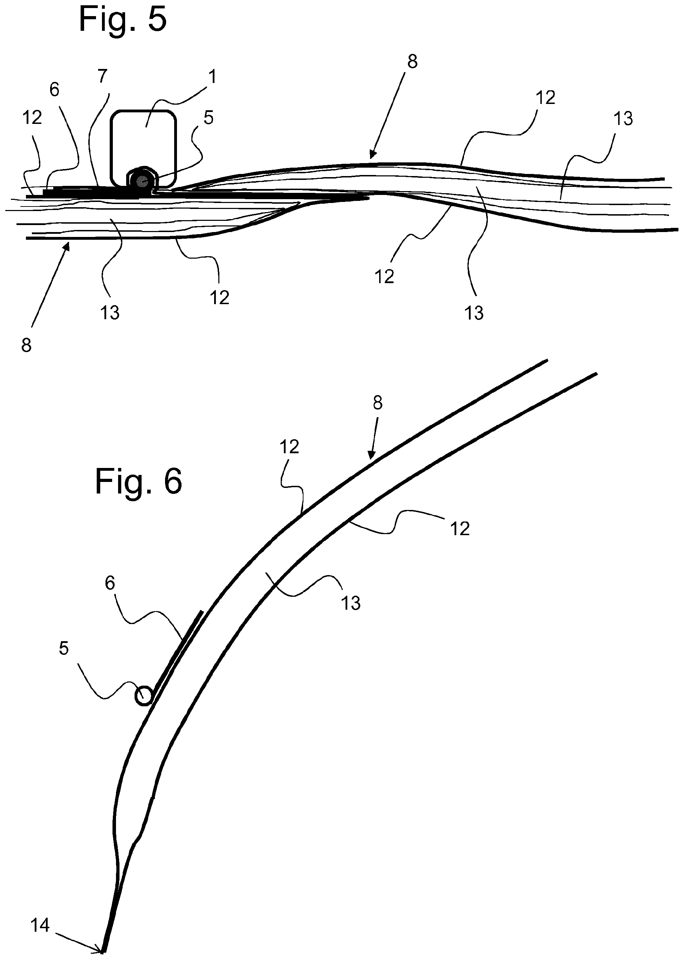

Die **Figur 5** zeigt einen Schnitt durch eine solche Verbindung wie sie längs der Linie A-A in Figur 3 zum Tragen kommt, mit dem anschliessenden Streifen und die Verbindung mit demselben in einem Schnitt. Man erkennt hier die Wärmereflexions-Schicht 13, die im Innern der Matte 8 eingeschlossen ist. Der Wärmereflexions-Mattenstreifen 8 im Bild links ist im Randbereich mit einem längs des Streifens verlaufenden Keder 5 ausgerüstet, der mit einem Kederfortsatz 6 mit der Folie 12 verschweisst ist, und der rechts im Bild anschliessende Matten-Streifen 8 auf der dem linken Streifen zugewandten Seite weist einen freien Folienlappen 7 auf. Dieser Folienlappen 7 kann um den Keder 5 gelegt werden und anschliessend wird das Verbindungsprofil 1 über den so eingefassten Keder 5 geschoben. In dieser Weise kann ein einzelnes biegsames Verbindungsprofil 1 zwei Streifen von Wärmereflexions-Matten 8 längs ihrer Längsränder verbinden, oder aber mittels einer Anzahl aufeinander folgender steifer Profilabschnitte 1.

Die **Figur 6** zeigt einen Schnitt längs der Linie B-B Figur 3. Im unteren Endbereich des Streifens der Wärmereflexions-Matte 8 ist ein Keder 5 mit einem Folienfortsatz 6 auf die Folie 12 aufgeschweisst, zum Beispiel je nach Situation ca. 20 cm bis 50 cm vor dem Längsende 14 des Streifens. Eine Wärmereflexions-Matte 8 kann dann mit diesem Streifenende überlappend mit einem Verbindungsprofil daran befestigt werden und unten mit ihrem Keder am Fundamentstreifen verankert werden und somit einen durchgehend wärmedämmenden Übergang zum Boden erzielen.

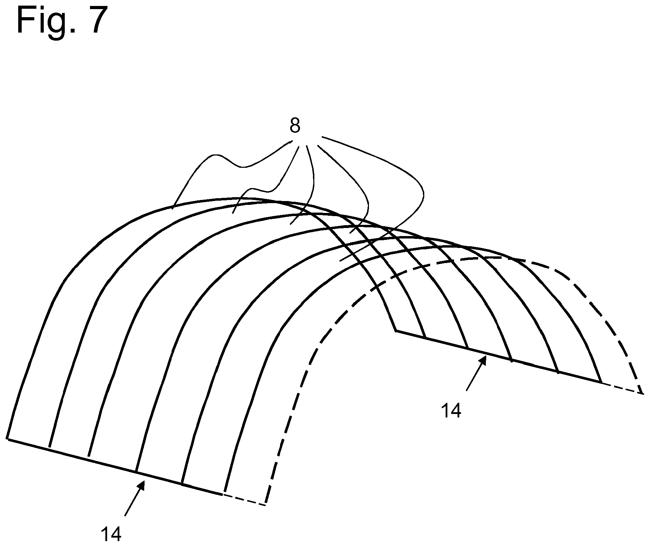

Die **Figur 7** zeigt schematisch die Streifen aus solchen Wärmereflexions-Matten 8, wie sie über eine bestehende Halle mit halbzylindrischer Form, wie sie etwa eine tonnenförmige Wellblech-Stahlhalle aufweist, verlegt werden können, wobei die Streifen der Länge nach miteinander zugkraftschlüssig verbunden werden und die Enden 14 der Streifen am Boden zugkraftschlüssig mit den Fundamentstreifen verbunden werden, um durch den Wind entstehende Auftriebskräfte zu absorbieren.

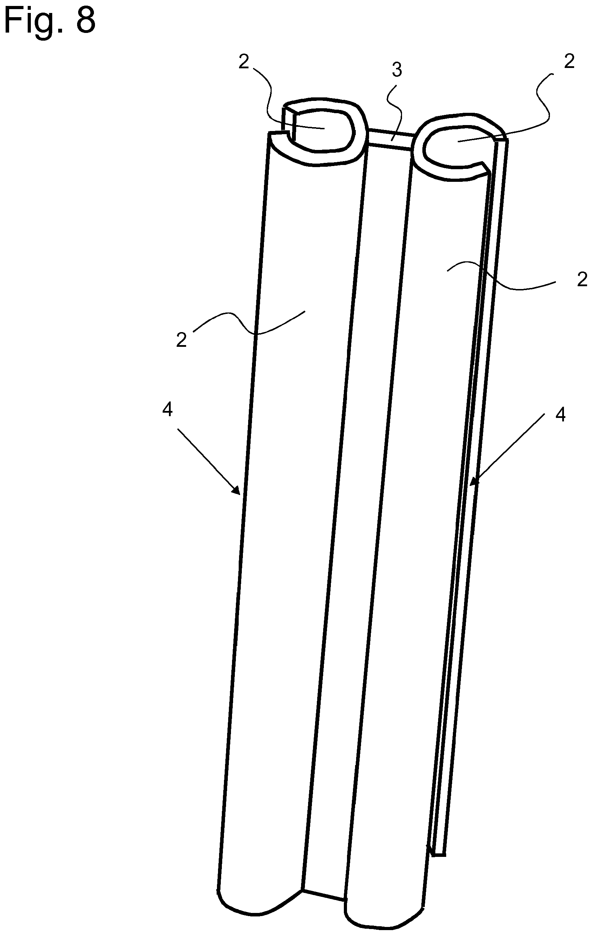

**Die** **Figur 8** zeigt ein alternatives mögliches Keder-Verbindungsprofil 1. Dieses wird von einem Aluminium-Strangprofil gebildet, das an seinen beiden Längsseiten je eine Nut 4 als Kederfassung 2 ausbildet. Jede solche Kederfassung 2 wird im gezeigten Beispiel von einem Rohr gebildet, welches einen Längsschlitz 4 aufweist, sodass sich der Rohrumfang bloss noch um ca. 270° erstreckt. Die beiden Öffnungen bzw. Nuten 4 in den beiden Kederfassungen 2 sind voneinander abgewandt nach aussen gerichtet, und die beiden Rohre sind durch einen Verbindungssteg 3 einstückig miteinander verbunden. Für die Verbindung zweier Folienbahnen werden solche Verbindungsprofile 1 von je ca. 30 cm bis 50 cm Länge eingesetzt. Bei einer Holzbinderhalle oder Stahlhalle können die einzelnen Wärmereflexionsmatten-Streifen mit solchen Verbindungsprofilen dichtend verbunden werden, wobei die Verbindungsprofile oberhalb der Träger der Holz- oder Stahlkonstruktion verlaufen und mit ihrem mittleren Verbindungssteg mit dem Träger verschraubt werden können. Gerüstbauten können komplett und rasch temporär eingehüllt werden, in dem mittels solcher Verbindungsprofile Streifen um Streifen aneinanderhängt werden. Hernach verbreitet sich in einem Winterhalbjahr rasch wohlige Wärme im Innern wie auch aussen an einem Roh- oder Renovationsbau. Genau gleich wirkt diese Hülle auch in umgekehrter Richtung als Isolationsschicht bei heissen Aussentemperaturen. Die Arbeitseffizienz der Fachleute im und am Bau wird wesentlich gesteigert.

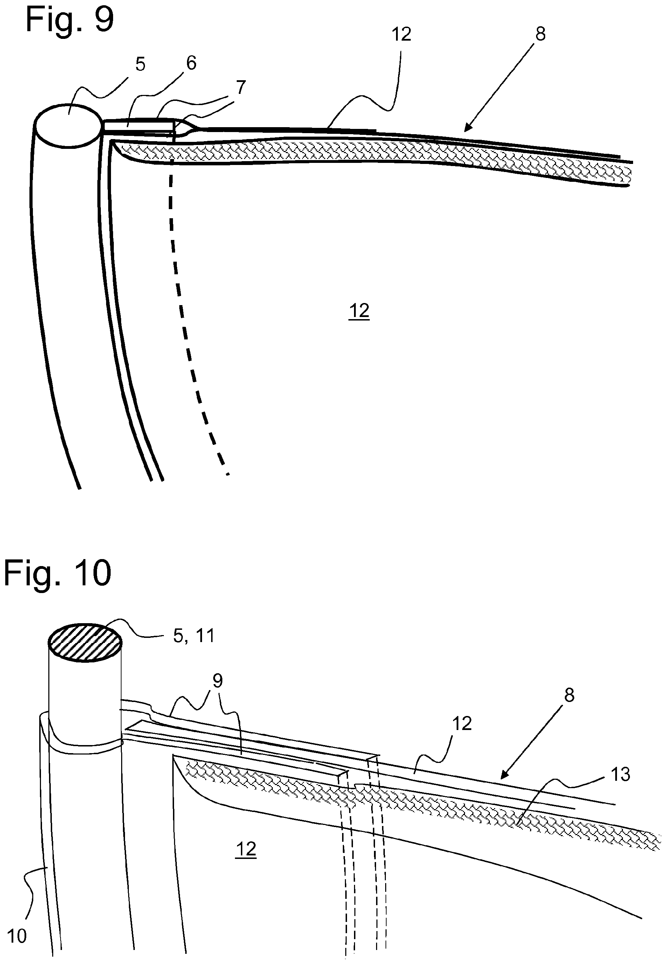

Die mit solchen Verbindungsprofilen 1 verbindbaren Mattenbahnen bzw. Mattenstreifen 8 sind längs ihrer Längsränder mit Kedern 5 ausgerüstet. Hierzu sind diese Keder 5 zum Beispiel, wie in **Figur 9** gezeigt, als einstückige Kunststoff-Rundprofile mit einem radial abstehenden Fortsatz 6 ausgeführt. Eine zweilagige Folie 12 ist längs ihres Randes in zwei Lappen 7 aufgetrennt, welche den Fortsatz 6 von beiden Seiten umschliessen und fest mit ihm verschweisst werden. Damit ist eine zugkraftschlüssige Verbindung des Keders 5 mit der Mattenbahn 8 geschaffen. Es kann auch ein Folienstreifen 12 an den Rand einer Wärmereflexions-Matte 8 auf die bloss eine Seite des Fortsatzes 6 aufgeschweisst werden, wobei die Krafteinleitung dann nicht ganz symmetrisch erfolgt.

Alternativ kann als Keder 5 ein Gummi-Rundprofil 11 dienen, das von einer Folie 10 umfasst wird, wobei die Folie 10 dann in zwei Randabschnitte 9 ausläuft, wie in **Figur 10** gezeigt. Diese beiden Randabschnitte 9 können eine Folie 12 einer Wärmereflexions-Matte 8 längs ihres Längsrandes beidseits zwischen sich aufnehmen und sie werden mit ihr auf beiden Seiten fest verschweisst. Auch so wird eine zugkraftschlüssige Verbindung quer zum Keder 5 erzeugt.

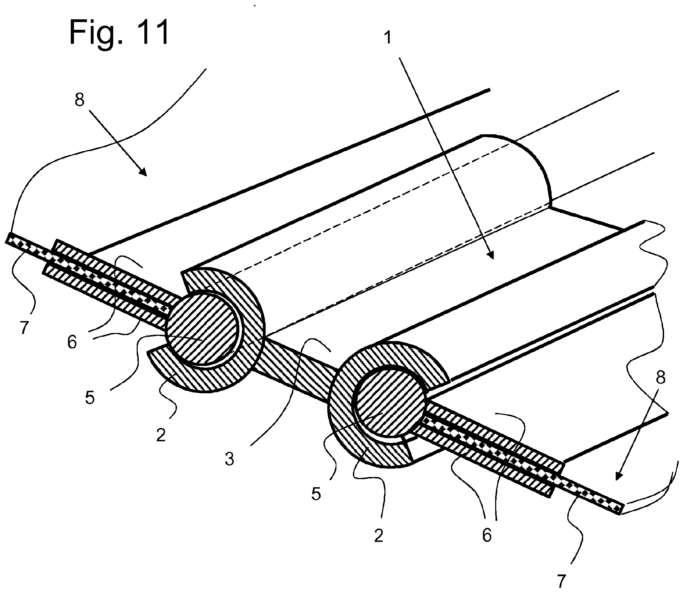

In **Figur 11** ist eine Möglichkeit einer Verbindung zweier benachbarter Wärmereflexions-Matten 8 dargestellt, deren Längsränder je mit einem Keder 5 ausgerüstet sind. Die Verbindungsprofile 1 werden in Längsrichtung zu den Wärmereflexions-Matten 8 über deren Keder 5 geschoben, eins nach dem anderen. Die zwischen den einzelnen aufeinanderfolgenden Verbindungsprofilen 1 entstehenden Schlitze erlauben eine Krümmung einer so erstellten Membrane auch um einen relativ kleinen Radius. Die Schlitze zwischen den aufeinanderfolgenden Verbindungsprofilen 1 können mittels einer elastischen Dichtungsmasse verschlossen werden. Idealerweise werden möglichst lange Verbindungsprofil-Abschnitte eingesetzt. Sie sind bei grosser Länge von mehreren Metern je nach Wandstärke der Profile um einen Radius biegsam, der es erlaubt, eine ganze Membrankuppel von einer Seite zur anderen mit nur wenigen Profilabschnitten zu erstellen. Eine solche Folienbahn aus Wärmereflexions-Matten 8 einer Tennishalle, welche die Spielfelder in Längsrichtung überspannt, ist ca. 42 m lang. Dazu reichen wenige gut transportierbare Verbindungsprofil-Abschnitte, zum Beispiel 3 x 14 m lange Abschnitte, oder 4 x 10.5 m oder 6 x 7 m lange Abschnitte.

Es versteht sich, dass in ähnlicher Weise, durch zugkraftschlüssige Verbindungen der Wärmereflexions-Matten 8 miteinander oder über Aluminiumprofile mit einem festen Gebäudeteil viele verschiedene Hallen, ob Stahlbauhallen, Holzbinder-Bauten, Folieneingefasste Aluminium-Binderbauten, Gerüstbauten, Festzelte und andere geeignete Gebäude eingehüllt werden können, und das deren Wärmedämmung massiv erhöht. Die Wärmereflexions-Matten können massgeschneidert angefertigt werden, um gegebenenfalls eine ganze Fassade eines Gebäudes von aussen zu verkleiden, unter Auslassung der Fensterlaibungen.

Zusammenfassend bieten solche Wärmereflexions-Matten 8 eine ganze Reihe von schlagenden technischen Vorteilen gegenüber herkömmlichen Konstruktionen.
1. Enorm viel bessere Wärmedämmung durch Konvexion der Strahlungswärme an den Wärmereflexions-Matten, aber auch an anderen Gebäuden als einhüllende Matten für eine Wärmereflexion.
2. Stark verbesserte Geräuschdämmung erhöht das Wohlbefinden im Innern.
3. Durch die einfache Handhabung mit in Verbindungsprofile 1 einschiebbaren Kedern 5 wird die Montage der Wärmereflexions-Matten 8 enorm erleichtert. Von vier Monteuren kann eine Halle eingehüllt werden.
4. Die Montage erfordert keine speziellen Werkzeuge. Die Verbindungsprofile können von Hand über die Keder geschoben werden. Zu verschraubende Klemmplatten erübrigen sich in diesem Fall.
5. Die Streifen-Fundamente 16 können werkseitig als Fertigbeton-Elemente hergestellt und mit eingelegten Ankerschienen 15 und vorbereiteten Isolationsanschlüssen komplett fertig auf die Baustelle transportiert und dort verlegt werden.
6. Die Streifen-Fundamente sind mit Verbindungsprofilen 1 als Ankerprofilschienen 15 ausgerüstet, sodass für die Bodenbefestigung der Wärmereflexions-Mattenbahnen 8 bloss noch deren endseitige Keder 5 in die Ankerschienen 15 eingeschoben werden müssen.
7. Vor Ort sind keine Betonarbeiten nötig.

### Ziffernverzeichnis

- 1: Verbindungprofil für Keder
- 2: Rohre zur Bildung von Nuten
- 3: Verbindungsbrücke
- 4: Längsschlitz im Verbindungsprofil 1
- 5: Keder
- 6: Kederfortsätze
- 7: Lappen am Folienrand
- 8: Wärmereflexions-Matte
- 9: Randabschnitte der Folie 10 um das Gummiprofil 11
- 10: Folie anschliessend an Gummiprofil 11
- 11: Gummi-Rundprofil
- 12: Kunststoff-Folie
- 13: Wärmereflexions-Schicht
- 14: Ende der Mattenbahn
- 15: Ankerprofilschiene
- 16: Beton-Fundamentstreifen

## Patentansprüche

1. Verwendung von Wärmereflexions-Matten (8) zum Einfassen oder Einkleiden bestehender Holzbinder-Hallen, Stahlbau- und Aluminiumstahl-Bauten, Gerüstbauten, Festzelten und ähnlichen nicht von Luft getragenen bestehenden Gebäuden durch Einfassen oder Einkleiden mit längs ihrer Längsränder zugkraftschlüssig miteinander verbundener Wärmereflexions-Matten auf ihrer Aussenseite oder Innenseite, wobei die einzelnen Wärmereflexions-Matten (8) aus einem Sandwich-Aufbau aus wenigstens zwei Lagen von zugfester textilverstärkter Kunststoff-Folie (12) bestehen und an mindestens zwei einander gegenüberliegenden Rändern mit Verbindungsmitteln für eine zugkraftschlüssige Befestigung ausgerüstet sind, und diese Wärmereflexions-Matten (8) mit einem Wärmereflexions-Stoff (13) in Form einer Hybrid-Schicht mit mehrlagigen Wärmereflexions-Schichten ausgefüllt sind, wobei die beiden äusseren Schichten aus Aluminium-Folie bestehen, die mit feinen Netzen aus Fäden oder Fasern verstärkt sind und dazwischen null bis drei Lagen IR-reflektierende Alufolien enthalten, und zwischen jeweils zwei bis fünf Alufolien je zwei Lagen einer Kunststoff-Folie mit darin enthaltenen kleinen Luftbläschen zur Bildung von absorptionsreduzierenden Luftpolstern angeordnet sind, und wobei diese Wärmereflexions-Matten (8) mit den an mindestens zwei einander gegenüberliegenden Rändern vorhandenen Verbindungsmitteln zugkraftschlüssig miteinander verbunden werden.

2. Verwendung von Wärmereflexions-Matten (8) nach Anspruch 1, **dadurch gekennzeichnet, dass** der Wärmereflexions-Stoff (13) enthält:
• eine erste, mit einem eingearbeiteten feinen Netz aus Fäden oder Fasern verstärkter Aluminium-Folie einschliesst, dann
• zwei Lagen von dünnen Kunststoff-Folien mit lauter darin enthaltenen kleinen Luftbläschen wie jene Folien mit Blasen für die Verpackungsindustrie zum Schutz von zerbrechlichen Waren, jedoch mit als Folie leichteren, dünneren und mit flacheren Bläschen,
• hernach eine dünne Aluminiumfolie, dann
• wieder zwei Kunststoff-Folien wie die vorstehend definierten, dann
• wieder eine dünne Aluminiumfolie, dann
• wieder zwei Kunststoff-Folien wie vorstehend definiert, dann
• wieder eine dünne Aluminiumfolie, dann wieder zwei Kunststoff-Folien wie vorstehend definiert und schliesslich
• als Abschluss wieder eine mit einem Fasernetz verstärkte Aluminiumfolie als Aussenschicht,
sodass die Matte insgesamt fünf Aluminium-Folien enthält.

3. Verwendung von Wärmereflexions-Matten nach einem der vorangehenden Ansprüche, **dadurch gekennzeichnet, dass** sie längs wenigstens eines Randabschnittes mit einem Keder (5) als Verbindungsmittel ausgerüstet ist.

4. Verwendung von Wärmereflexions-Matten nach einem der vorangehenden Ansprüche, **dadurch gekennzeichnet, dass** sie längs wenigstens eines Randabschnittes mit einem Keder (5) als Verbindungsmittel ausgerüstet ist, indem dieser von einem Folienstreifen (9) umfasst ist, und die zwei freien Endstücke (9) mit einem oder beiden Folienstreifen der Kunststoff-Folie (12) der Wärmereflexions-Matte (8) verschweisst sind.

5. Verwendung von Wärmereflexions-Matte nach einem der vorangehenden Ansprüche, **dadurch gekennzeichnet, dass** sie längs wenigstens eines Randabschnittes im Randbereich mit einem über einen Folienfortsatz (6) aufgeschweissten Keder (5) ausgerüstet ist, zur überlappenden Verbindung mit einem von einer Wärmereflexions-Matte (8) abstehenden freien Folienrand (7) durch Einführen eines Klemmprofiles (1) über den mit dem Folienrand (7) eingefassten Keder (5).

6. Verwendung von Wärmereflexions-Matten nach einem der vorangehenden Ansprüche, **dadurch gekennzeichnet, dass** sie längs ihres Randes rundum mit einem Keder (5) als Verbindungsmittel ausgerüstet sind.

7. Verwendung von Wärmereflexions-Matten nach einem der Ansprüche 4 bis 7, **dadurch gekennzeichnet, dass** sie längs wenigstens eines Randabschnittes mit einem oder mehreren Verbindungs-Klemmprofilen (1) aus Aluminium zur Aufnahme eines Keders ausgerüstet sind.

8. Verwendung von Wärmereflexions-Matten nach einem der vorangehenden Ansprüche, **dadurch gekennzeichnet, dass** sie in ihrer Flächenkontur als Quadrat, Rechteck, Dreieck oder Mehreck ausgeführt sind.

## Claims

1. Use of heat-reflecting mats (8) for edging or lining existing wooden truss halls, structural steel and aluminium-steel buildings, scaffolding structures, marquees and similar existing buildings not supported by air by edging or lining with heat-reflecting mats connected to one another along their longitudinal edges in a tension-locking manner on their outer side or inner side, the individual heat reflection mats (8) consisting of a sandwich structure of at least two layers of tension-resistant textile-reinforced plastic film (12) and being equipped on at least two mutually opposite edges with connecting means for tension-locking fastening, and these heat-reflecting mats (8) are filled with a heat-reflecting fabric (13) in the form of a hybrid layer with multilayer heat-reflecting layers, the two outer layers consisting of aluminium foil reinforced with fine nets of threads or fibres and containing between zero and three layers of IR-reflecting aluminium foil and between every two to five aluminium foils there are arranged two layers each of a plastic foil with small air bubbles contained therein for the formation of absorption-reducing air cushions, and wherein these heat-reflecting mats (8) are connected to one another in a traction-locking manner by the connecting means present on at least two mutually opposite edges.

2. Use of heat-reflecting mats (8) according to claim 1, **characterized in that** the heat-reflecting fabric (13) contains:
• a first layer of aluminium foil reinforced with an incorporated fine net of threads or fibres, then
• two layers of thin plastic film with small air bubbles contained therein, like those films with bubbles used in the packaging industry to protect fragile goods, but with the bubbles lighter, thinner and flatter than the film,
• then a thin aluminium foil, then again two
• then two plastic films like the ones defined above, then another
• again a thin aluminium foil, then
• again two plastic foils as defined above, then
• then again a thin aluminium foil, then again two plastic foils as defined above, and
• finally, another aluminium foil reinforced with a fibre net as the outer layer, so that the mat contains a total of five aluminium foils.

3. Use of heat reflection mats according to one of the preceding claims, **characterised in that** it is equipped along at least one edge section with a piping (5) as a connecting means.

4. Use of heat reflection mats according to one of the preceding claims, **characterised in that** it is equipped along at least one edge section with a piping (5) as a connecting means, **in that** this is enclosed by a film strip (9), and the two free end pieces (9) are welded to one or both film strips of the plastic film (12) of the heat reflection mat (8).

5. Use of heat reflection mat according to one of the preceding claims, **characterised in that** it is equipped along at least one edge section in the edge region with a piping (5) welded on via a film extension (6) for overlapping connection to a free film edge (7) projecting from a heat reflection mat (8) by insertion of a clamping profile (1) over the piping (5) bordered with the film edge (7).

6. Use of heat reflection mats according to one of the preceding claims, **characterised in that** they are equipped along their edge all round with a piping (5) as connecting means.

7. Use of heat reflection mats according to one of the claims 4 to 7, **characterised in that** they are equipped along at least one edge section with one or more connecting clamping profiles (1) made of aluminium for receiving a piping.

8. Use of heat reflection mats according to one of the preceding claims, **characterised in that** their surface contour is designed as a square, rectangle, triangle or polygon.

## Revendications

1. Utilisation de nattes thermo-réfléchissantes (8) pour border ou habiller des halles en bois, des constructions en acier et en aluminium, des échafaudages, des tentes de fête et des bâtiments existants similaires non portés par l'air, par bordage ou habillage avec des nattes thermo-réfléchissantes reliées entre elles par traction le long de leurs bords longitudinaux sur leur face extérieure ou leur face intérieure, les nattes de réflexion thermique individuelles (8) étant constituées d'une structure en sandwich composée d'au moins deux couches de feuille de matière plastique (12) renforcée par du textile et résistante à la traction, et étant équipées sur au moins deux bords opposés l'un à l'autre de moyens de liaison pour une fixation par force de traction, et ces nattes thermo-réfléchissantes (8) sont remplies d'un tissu thermo-réfléchissant (13) sous la forme d'une couche hybride comportant plusieurs couches thermo-réfléchissantes, les deux couches extérieures étant constituées d'une feuille d'aluminium renforcée par de fins réseaux de fils ou de fibres et contenant entre elles de zéro à trois couches de feuilles d'aluminium réfléchissant les IR, et deux couches d'une feuille de matière plastique contenant de petites bulles d'air pour former des coussins d'air réduisant l'absorption sont disposées entre deux à cinq feuilles d'aluminium, et ces nattes thermo-réfléchissantes (8) sont reliées entre elles par des moyens de liaison par traction présents sur au moins deux bords opposés.

2. Utilisation de nattes de réflexion de la chaleur (8) selon la revendication 1, **caractérisée en ce que** le tissu de réflexion de la chaleur (13) contient :
• une première feuille d'aluminium renforcée par un fin réseau de fils ou de fibres incorporé, puis
• deux couches de films plastiques minces contenant de petites bulles d'air, comme les films à bulles utilisés dans l'industrie de l'emballage pour protéger les produits fragiles, mais plus légers, plus minces et avec des bulles plus plates,
• ensuite une fine feuille d'aluminium, puis
• à nouveau deux feuilles de plastique telles que définies ci-dessus, puis
• à nouveau une feuille d'aluminium mince, puis
• à nouveau deux feuilles de plastique telles que définies ci-dessus, puis
• à nouveau une feuille mince d'aluminium, puis à nouveau deux feuilles de matière plastique telles que définies ci-dessus et enfin
• pour finir, à nouveau une feuille d'aluminium renforcée par un réseau de fibres comme couche extérieure,
de sorte que la natte contient au total cinq feuilles d'aluminium.

3. Utilisation de nattes thermo-réfléchissantes selon l'une des revendications précédentes, **caractérisée en ce qu'**elles sont équipées d'un bourrelet (5) comme moyen de liaison le long d'au moins une section de bord.

4. Utilisation de nattes de réflexion de la chaleur selon l'une des revendications précédentes, **caractérisée en ce qu'**elle est équipée le long d'au moins une section de bord d'un bourrelet (5) comme moyen de liaison, **en ce que** celui-ci est entouré d'une bande de film (9), et les deux pièces d'extrémité libres (9) sont soudées à l'une ou aux deux bandes de film du film plastique (12) de la natte de réflexion de la chaleur (8).

5. Utilisation d'une nappe thermo-réfléchissante selon l'une des revendications précédentes, **caractérisée en ce qu'**elle est équipée, le long d'au moins une section de bord dans la zone de bord, d'un bourrelet (5) soudé par l'intermédiaire d'un prolongement de feuille (6), pour la liaison par chevauchement avec un bord libre de feuille (7) dépassant d'une nappe thermo-réfléchissante (8), par introduction d'un profilé de serrage (1) par-dessus le bourrelet (5) bordé par le bord de feuille (7).

6. Utilisation de nattes thermo-réfléchissantes selon l'une des revendications précédentes, **caractérisée en ce qu'**elles sont équipées sur tout leur pourtour, le long de leur bord, d'un bourrelet (5) servant de moyen de liaison.

7. Utilisation de nattes thermo-réfléchissantes selon l'une des revendications 4 à 7, **caractérisée en ce qu'**elles sont équipées, le long d'au moins une section de bord, d'un ou de plusieurs profilés de serrage de liaison (1) en aluminium destinés à recevoir un bourrelet.

8. Utilisation de nattes de réflexion thermique selon l'une des revendications précédentes, **caractérisée en ce que** le contour de leur surface est un carré, un rectangle, un triangle ou un polygone.
